# EUROPÄISCHE PATENTSCHRIFT

(11) **EP 0 558 900 B1**
(45) Veröffentlichungstag und Bekanntmachung des Hinweises auf die Patenterteilung: **26.03.1997**
(21) Anmeldenummer: 93100840.3
(22) Anmeldetag: 21.01.1993
(51) Int. Cl.: C25B 9/00, C25B 1/10, C25B 15/00, C25B 1/04

(54) **Einrichtung zur elektrolytischen Herstellung von Wasserstoff aus Wasser**
Apparatus for electrolytic production of hydrogen from water
Dispositif de production électrolytique d'hydrogène à partir de l'eau

(30) Priorität: 06.03.1992 DE 4207117
(43) Veröffentlichungstag der Anmeldung: 08.09.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: Ledjeff, Konstantin, Dr., W-7812 Bad Krozingen (DE)

(56) Entgegenhaltungen:
- EP-A- 0 368 812
- EP-A- 0 417 647
- US-A- 3 910 831

## Beschreibung

Die Erfindung betrifft eine Einrichtung zur elektrolytischen Herstellung von Wasserstoff gemäß dem Oberbegriff des Anspruchs 1, wie sie z.B. aus der EP-A-0368812 bekannt ist.

In der US-Patentschrift 3 910 831 ist eine gattungsgemäße membranfreie Einrichtung gezeigt mit Gasreinigungseinrichtungen und einem speziellen Tank aus einer La-Ni-Verbindung.

Wasserstoff bietet als Energieträger die Vorteile der einfachen Herstellbarkeit durch Elektrolyse und der Umweltfreundlichkeit bei der Nutzung. Nachteilig ist die relativ niedrige volumenspezifische Energiedichte, die von der Art der Speicherung - drucklos, unter Druck, in Metallhydriden, flüssig - abhängt. Recht günstige Eigenschaften zeigen Hydridspeicher mit Energiedichten bis zu ca. 800 Wh/l, bzw. 400 Wh/kg. Diese Speicher können in beliebigen Größen hergestellt werden und sind besonders für mobile Anwendungen geeignet.

Ein breiter Einsatz von Wasserstoff, gespeichert in Hydriden, scheitert heute vor allem an den Kosten und an der fehlenden Infrastruktur zur Wasserstoffbereitstellung. Für Anwendungen im Bereich mobiler Kleingeräte, mit Leistungen bis zu einigen kW, gibt es bisher kein System, das eine einfache Nachfüllung der leeren Hydridpatrone erlaubt.

Aufgabe der Erfindung ist es, zu verhindern, daß Wasserstoff aus dem Kathodenraum in den Anodenraum und Sauerstoff aus dem Anoden- in den Kathodenraum gelangen kann und daher dem Sicherheitsaspekt größte Bedeutung beigemessen wird. Erfindungsgemäß wird diese Aufgabe durch Anspruch 1 gelöst. Vorteilhafte Ausgestaltungen der Erfindung sind in den Unteransprüchen angegeben.

Typisch für die Membranelektroylse ist ein Wassertransport über die Membran 4 aus dem Anodenraum 2 in den Kathodenraum 3, der ohne geeignete Maßnahmen dazu führt, daß während des Betriebes das Wasser in die Leitungen des Wasserstoffkreises steigt.

Nach der EP-A-036812 sind deshalb Anoden- und Kathodenraum zusätzlich über eine Leitung verbunden.

Die Einrichtung ist weiterhin so gestaltet, daß sie für den mobilen Einsatz verwendbar ist, z.B. durch steckbare Verbindungen, oder, wie bei Vakuumverbindungen, mit Dichtringen, insbesondere z.B. für den Vorratsbehälter, die Elektrolysezelle, den Wasserbehälter und die Gastrocknungseinrichtung.

Das Eindringen von Wasserstoff in den Anodenraum bzw. vom Sauerstoff in den Kathodenraum wird nun durch poröse Körper oder Membranen verhindert. Die Ansprüche 2 bis 5 betreffen weitere Sicherheitseinrichtungen, so z.B. die Ausbildung des Wasserstoffspeichers als Hydridspeicher. Besonders wichtig ist die Überwachung der Steckverbindung des Wasserstoffspeichers in die Einrichtung. Weiterhin wird die gesamte Einrichtung überwacht auf austretenden Wasserstoff, wobei Katalysatormatten den austretenden Wasserstoff binden und diese Reaktion, bei der die Katalysatormatten warm werden, durch Sensoren überwacht wird.

Im folgenden wird die Erfindung anhand eines Ausführungsbeispiels erläutert:
Abb. 1 gibt das Schaltschema der Einrichtung wider.
Abb. 2 zeigt beispielhaft die Sicherheitsschaltung für die Einrichtung und
Abb. 3 die Schaltung für die Heizung der Gastrocknungsvorrichtung.

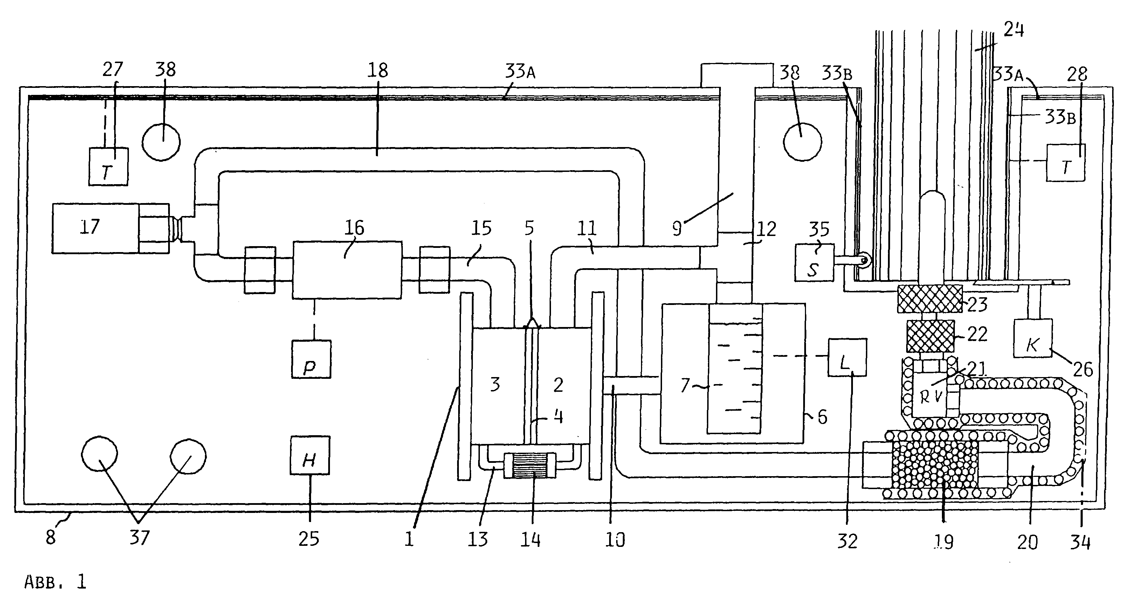

Die Elektrolysezelle 1 in Abb. 1 ist in der bekannten Membrantechnik, s. ABB-Druckschrift Nr. CH-VE 104688 D, ausgeführt. Die Zelle besteht aus einem Anoden- (O₂-Entwicklung) 2 und einem Kathodenraum (H₂-Entwicklung) 3, die durch eine ionenleitende Polymermembran 4 voneinander getrennt sind. Auf beiden Seiten der Membran sind poröse Stromverteilerplatten 5 in der Weise angebracht, daß Druckdifferenzen von mehreren bar zwischen der H₂- und der O₂- Seite keine Funktionsstörungen hervorrufen. Der weitere Innenaufbau der Zelle, sowie die Stromzufuhrkabel sind hier nicht dargestellt, da sie aus der Literatur bekannt sind.

Zur Versorgung der Zelle 1 mit Wasser steht ein Wasservorratsgefäß 6 zur Verfügung, dessen Füllstand z.B. durch ein markiertes, durchsichtiges Glas 7 optisch kontrolliert werden kann. Damit dies von außen geschehen kann, muß das Glas 7 geeignet in das Gerätegehäuse 8 eingebracht werden. Der Vorratsbehälter 6 kann von außen über die Leitung 9 nachgefüllt werden und ist gleichzeitig über die Leitung 10 mit dem Anodenraum 2 verbunden. Die Abführung des erzeugten Sauerstoffs aus dem Anodenraum 2 erfolgt nahezu drucklos über die Leitung 11, die in die Leitung 9 einmündet. Diese Einmündung 12 muß immer oberhalb des maximalen Füllstandes im Vorratsgefäß 6 liegen, damit die austretenden Gase nicht das Wasser mitbefördern.

Typisch für die Membranelektrolyse ist ein Wassertransport über die Membran 4 aus dem Anodenraum 2 in den Kathodenraum 3, was dadurch verhindert wird, daß die Räume 2 und 3 durch die Leitung 13 miteinander verbunden werden und in diese Leitung wird ein poröser Körper 14 eingebracht. Die Porengröße dieses Körpers wird so ausgewählt (im Bereich von 1 Mikrometer), daß die flüssigkeitsgefüllten Poren - bei einem vorgegebenen maximalen Wasserstoffdruck - nicht von dem unter Druck stehenden H2 freigeblasen werden können. Über diesen Körper wird jedoch Wasser aus 3 nach 2 transportiert, da der Druck im Wasserstoffkreis immer größer ist, als der hydraulische Druck im Vorratsgefäß 6 und der Leitung 9.

Der in dem Kathodenraum 3 erzeugte Wasserstoff strömt in der Leitung 15 zu einem Drucksensor 16 und weiter zu einem Überströmventil 17, das den weiteren Durchfluß von Wasserstoff solange sperrt, bis der eingestellte Druck zum Öffnen des Ventiles erreicht wird, z.B. 6 bar. Dann öffnet das Ventil und der Wasserstoff strömt durch die Leitung 18 zu einer Trocknereinheit 19, die z.B. aus einer Schüttung von Molekularsieb-Granulat bestehen kann. Das Gas wird dort getrocknet und strömt durch die Leitung 20 zu dem Rückschlagventil 21. Dieses Ventil öffnet in die Richtung der Elektrolysezelle und sperrt, wenn Gas von außen über die nicht selbst sperrende Steckkupplung 22 eindringen will.

Ein mobiler Hydridspeicher 24 wird so in eine Öffnung des Gehäuses 8 eingebracht, daß das selbstsperrende Kupplungsventil 23 des Speichers 24 in das Gegenstück 22 einrastet. Alle Leitungen zwischen dem Speicher 24 und dem Überströmventil 17 haben Durchlaß und wenn bei Elektrolysebetrieb nach einer gewißen Zeit in dem durch die Komponenten 3, 15, 16 und teilweise 17 gebildeten Raum der Wasserstoffdruck über den Schaltdruck des Ventils 17 ansteigt, dann kann der erzeugte Wasserstoff in den Speicher 24 strömen.

Auf Grund der Beladung steigt im Hydridspeicher 24 der Druck an und dieser Anstieg, der in dem Drucksensor 16 gemessen wird, dient als Signal zur Abschaltung des Elektrolyseurs.

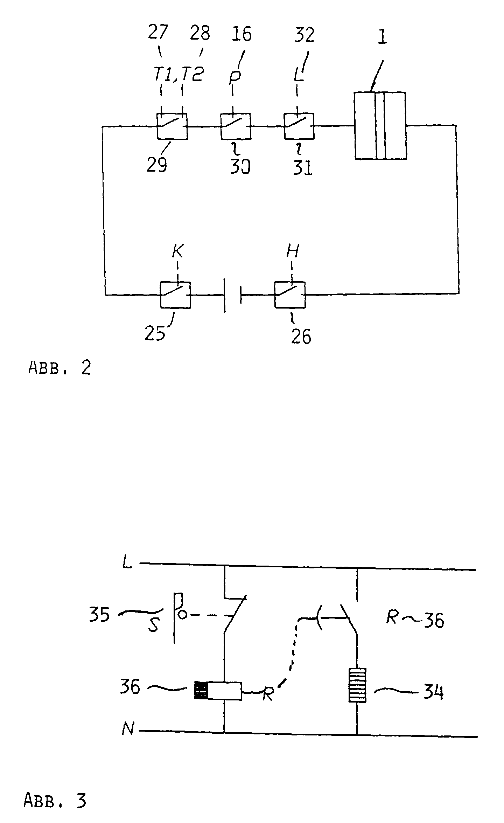

Die Inbetriebnahme des Gerätes erfolgt durch die Betätigung des Hauptschalter H 25 (s. Abbildung 2). Die Zuschaltung des Elektrolysestroms auf die Zelle 1 ist von mehreren Kontrollschaltern abhängig. Der Schalter 26 wird geschlossen, wenn der Hydridspeicher 24, bzw. dessen Steckverbindung 23, in die Kupplung 22 eingerastet sind. Schalter 29 öffnet, wenn einer der Temperatursensoren 27 oder 28 eine Temperaturerhöhung anzeigt. Schalter 30 öffnet, wenn der im Druckmesser 16 bestimmte Druck einen bestimmten Grenzwert überschreitet. Dieses Signal zeigt bei Normalbetrieb das Ende der Ladephase an. Der Druckgrenzwert zur Abschaltung muß stets etwas höher liegen als der Überströmdruck im Ventil 17. Der Schalter 31 unterbricht den Stromkreis, wenn der Füllstandsmesser 32 am Vorratsgefäß 6 einen zu niedrigen Wasserstand anzeigt.

Eine weitere Sicherheitsmaßnahme stellen Katalysatormatten 33a, b dar, die innerhalb des Gehäuses 8 der Einrichtung im Deckenbereich fixiert sind (33 a) und außerhalb des Gehäuses 8 in der Nähe der Steckkupplung 23 des Hydridspeichers 24. Der Temperaturfühler 27 hat Kontakt mit der Matte 33a bzw. Temperaturfühler 28 mit Matte 33b. Erwärmen sich die Matten dadurch, daß der aus Lecks austretende Wasserstoff an ihnen zu Wasser rekombiniert, dann schaltet Schalter 29 die Sicherheitsschaltung und damit den Elektrolysestrom aus.

Die Einrichtung enthält auch eine vorteilhafte Vorrichtung zur thermischen Regenierung der Trocknervorrichtung 19 (Abb. 3). Eine elektrische Heizung 34 umgibt den durch die Komponenten 19, 20, 21 bis 22 gebildeten Gasraum. Nach Abschluß des Ladevorganges wird der Hydridspeicher 24 aus der Haltevorrichtung entfernt und dadurch wird der Schalter S 35 betätigt, der das Zeitrelais 36 startet. Das Relais schließt den Stromkreis der Heizung 34, die dadurch heiß wird. Bei Molekularsieben reichen Temperaturen von ca. 250 °C zur Reaktivierung. Der freigesetzte Wasserdampf verläßt das Gerät über die Kupplung 22. Nach einer bestimmten Heizzeit sperrt das Relais 36 die Stromzufuhr zur Heizung 34 und das Gerät schaltet ab.

In Abb. 1 ist angedeutet, daß das Gehäuse 8 an den vertikalen Fronten Öffnungen 37 im unteren Bereich und Öffnungen 38 im oberen Bereich besitzt. Dadurch wird die Belüftung und Kühlung des Geräteinnenraumes sichergestellt.

Es ist selbtverständlich zur Vergrößerung der Leistung der Einrichtung mehrere Zellen elektrisch in Serie zu schalten. Alle stoffführenden Leitungen werden dabei parallel geschaltet.

## Patentansprüche

1. Einrichtung zur elektrolytischen Herstellung von Wasserstoff aus Wasser mit einer Elektrolysezelle bestehend aus Anoden- (2) und Kathodenraum (3), die durch eine ionenleitende Polymermembran (4) getrennt sind, aber zum Ausgleich des Wasserstandes über eine Leitung (13) miteinander verbunden sind, Spannungsversorgung und Regel- sowie Überwachungseinrichtungen, Vorratsbehältern für Wasser und Wasserstoff und entsprechenden Verbindungsleitungen,
**dadurch gekennzeichnet,**
daß
a) die Einrichtung derart ausgebildet ist, daß sie für den mobilen Einsatz verwendbar ist, wobei
b) mindestens der Wasserstoffspeicher 24 lösbar von der Einrichtung ausgebildet ist,
c) und ein mit Wasser gefüllter poroser Körper (14) oder eine Membran mit einer Porengröße von etwa 1 Mikrometer in der Leitung 13 vorgesehen ist, die verhindert, daß Gas vom Raum 2 nach Raum 3 strömt und umgekehrt, aber bewirkt, daß Wasser aus Raum 3 zurück in Raum 2 strömen kann.

2. Einrichtung nach Anspruch 1,
**dadurch gekennzeichnet,**
daß der Wasserstoffspeicher 24 ein Hydridspeicher ist.

3. Einrichtung nach einem der Ansprüche 1 - 2,
**dadurch gekennzeichnet,**
daß für die lösbare Verbindung 22, 23 des Wasserstoffspeichers 24 ein Schalter 26 zur Überwachung vorgesehen ist.

4. Einrichtung nach einem der Ansprüche 1 - 3,
**dadurch gekennzeichnet,**
daß zur Überwachung von austretendem Wasserstoff Katalysatormatten 33a, b innerhalb und außerhalb des Gehäuses 8 der Einrichtung vorgesehen sind.

5. Einrichtung nach Anspruch 4,
**dadurch gekennzeichnet,**
daß für die Temperaturüberwachung der Katalysatormatten Sensoren 27 und 28 vorgesehen sind.

6. Einrichtung nach Anspruch 1,
**dadurch gekennzeichnet,**
daß eine Gastrocknungsvorrichtung 19 und zu ihrer Regenerierung eine Heizung 34 vorgesehen ist.

## Claims

1. Apparatus for electrolytically producing hydrogen from water, with an electrolysis cell comprising and anode space (2) and a cathode space (3), which are separated by an ion-conducting polymeric membrane (4) but which, for purposes of equalising the water level, are interconnected by a pipe (13), the apparatus further comprising a power supply and regulating and monitoring means, storage containers for water and hydrogen and corresponding connecting pipes,
**characterised in that**
a) the device is so designed that it is suitable for mobile use,
b) at least the hydrogen store (24) being detachable from the apparatus,
c) and a porous body (14) filled with water or a membrane with a pore size of approximately 1 micrometer is provided in the pipe (13), and which prevents gas from flowing from space (2) to space (3) and vice versa, but permits water to flow back from space (3) back into space (2).

2. Apparatus according to claim 1,
**characterised in that**
the hydrogen store (24) is a hydride store.

3. Apparatus according to one of claims 1 to 2,
**characterised in that**
a switch (26) is provided to monitor the detachable connection (22, 23) of the hydrogen store (24).

4. Apparatus according to one of claims 1 to 3,
**characterised in that**
catalyst mats (33a, b) are provided inside and outside the housing (8) of the device for monitoring emerging hydrogen.

5. Apparatus according to claim 4,
**characterised in that**
sensors (27 and 28) are provided to monitor the temperature of the catalyst mats.

6. Apparatus according to claim 1,
**characterised in that**
a gas-drier device (19) is provided and, for its regeneration, a heating system (34).

## Revendications

1. Dispositif de production électrolytique d'hydrogène à partir de l'eau avec une cellule d'électrolyse se composant d'un espace anode (2) et d'un espace cathode (3), qui sont séparés par une membrane polymère (4) conductrice d'ions, mais sont reliés ensemble pour l'égalisation du niveau d'eau, par une conduite (13), d'une alimentation en tension et de dispositifs de contrôle et de régulation, de réservoirs de stockage pour l'eau et l'hydrogène et de conduites de liaison correspondantes,
caractérisé en ce que
a) le dispositif est réalisé de manière qu'il soit utilisable pour l'application mobile, tandis que
b) le stockage d'hydrogène (24) est réalisé amovible du dispositif,
c) est prévu un corps (14) rempli d'eau ou une membrane ayant une grandeur de pores d'environ 1 micromètre dans la conduite (13), qui empêche que du gaz passe de l'espace (2) vers l'espace (3), et inversement, mais fait en sorte, que de l'eau puisse s'écouler en retour de l'espace (3) dans l'espace (2).

2. Dispositif selon la revendication 1,
caractérisé en ce que
le stockage d'hydrogène (24) est un stockage d'hydrure.

3. Dispositif selon une des revendications 1-2,
caractérisé en ce que
sur la liaison (22, 23) amovible du stockage d'hydrogène (24) est prévu un interrupteur (26) pour la surveillance.

4. Dispositif selon une des revendications 1-3,
caractérisé en ce que
pour la surveillance de l'hydrogène sortant, sont prévues des nattes de catalyseur (33a, b) à l'intérieur et à l'extérieur du boîtier (8) du dispositif.

5. Dispositif selon la revendication 4,
caractérisé en ce que
pour le contrôle de la température des nattes de catalyseur, sont prévues des capteurs (27) et (28).

6. Dispositif selon la revendication 1,
caractérisé en ce qu'
est prévu un dispositif de séchage du gaz (19) et pour sa régénération un chauffage (34).
